# DEMANDE DE BREVET EUROPEEN

(11) **EP 4 765 050 A1**
(43) Date de publication de la demande: **24.06.2026**
(21) Numéro de dépôt: 25224998.2
(22) Date de dépôt: 18.12.2025
(51) Int. Cl.: G06V 20/56, G06V 20/00, G06V 40/10, G06V 40/16

(54) **PROCÉDÉ D'AUTHENTIFICATION D'UNE IMAGE CAPTURÉE DANS UN ENVIRONNEMENT EXTÉRIEUR D'UN VÉHICULE AUTOMOBILE**

(30) Priorité: 23.12.2024 FR 2415154
(71) Demandeur: AMPERE s.a.s., 92100 Boulougne-Billancourt (FR)
(72) Inventeur: ROSSELLO, NORBERT, 06410 BIOT (FR)
(74) Mandataire: Renault Group

(57) **Abrégé**

Procédé d'authentification d'une image candidate acquise par un moyen d'acquisition d'images (2) agencé sur un véhicule (100) automobile pour acquérir des images d'un environnement extérieur audit véhicule (100) automobile, le procédé d'authentification étant mis en œuvre lorsque le véhicule (100) est à l'arrêt, et caractérisé en ce qu'il comprend les étapes suivantes :
- une première étape d'acquisition (E01), par le moyen d'acquisition d'images (2), d'au moins une image de référence ; suivie par
- une deuxième étape d'acquisition (E02) d'au moins une image candidate, par le moyen d'acquisition d'images (2), d'un individu approchant le véhicule (100) ;

## Description

L'invention concerne un procédé d'authentification d'une image capturée dans un environnement extérieur d'un véhicule automobile.

L'industrie automobile développe aujourd'hui l'utilisation de la reconnaissance faciale pour activer différentes fonctionnalités du véhicule, les fonctionnalités pouvant requérir des niveaux de sécurité plus ou moins élevés.

Le traitement de reconnaissance faciale peut se décomposer en trois étapes :
- une étape d'enrôlement correspondant à la capture d'un portait d'une personne candidate par un capteur d'images (notamment une caméra) afin de construire une empreinte biométrique faciale candidate,
- une étape d'identification dans laquelle l'empreinte biométrique faciale candidate est comparée à une base d'empreintes biométriques faciales, la personne étant identifiée si l'une des empreintes de la base correspond à l'empreinte candidate, et
- une étape d'authentification dans laquelle on vérifie que la personne candidate est réellement présente devant la caméra.

L'invention concerne l'étape d'authentification. Elle porte plus particulièrement sur la détection d'une fraude consistant à présenter un leurre en entrée du traitement de reconnaissance faciale, afin d'être faussement identifié et de profiter des droits de la personne usurpée. Un mode de fraude le plus courant et le plus simple de mise en œuvre consiste à présenter des photos ou vidéos de la personne usurpée face au capteur. Il est donc primordial de se prémunir de ce type de fraude.

Le but de l'invention est de remédier aux inconvénients décrits ci-dessus en proposant un véhicule capable de détecter de manière fiable un membre de la famille ou une connaissance qui marche en direction dudit véhicule et capable de détecter une tentative de fraude par usurpation d'identité.

Selon le type de capteur utilisé pour capturer les images d'une personne (par exemple une caméra RVB ou une caméra infrarouge), différentes technologies permettent de détecter la présence d'un leurre. Par exemple, la technologie par caméra infrarouge permet de discriminer un leurre d'un visage humain en analysant les reflets présents sur l'image capturée. Alternativement, l'authentification à partir des images d'une caméra RGB utilisera la détection des mouvements des yeux ou du visage, la pulsation sanguine, la texture de peau, ou encore la géométrie d'un visage.

Ces solutions d'authentification nécessitent d'utiliser des algorithmes coûteux en temps de traitement et en achat de licences. De plus, ces solutions étant essentiellement développées pour le domaine bancaire ou douanier, les traitements proposés sont génériques et peu adaptés aux spécificités de la reconnaissance faciale appliquée au domaine automobile.

Le but de l'invention est de fournir un procédé d'authentification d'images remédiant aux inconvénients ci-dessus et améliorant les procédés d'authentification d'images connus de l'art antérieur. En particulier, l'invention permet de réaliser un procédé qui soit simple et fiable et qui permette une authentification rapide, fiable et peu couteuse en temps de calcul.

A cet effet, l'invention se rapporte à un procédé d'authentification d'une image candidate acquise par un moyen d'acquisition d'images agencé sur un véhicule automobile pour acquérir des images d'un environnement extérieur audit véhicule automobile, le procédé d'authentification étant mis en œuvre lorsque le véhicule est à l'arrêt, le procédé d'authentification comprenant les étapes suivantes :
- une première étape d'acquisition, par le moyen d'acquisition d'images, d'au moins une image de référence ; suivie par
- une deuxième étape d'acquisition d'au moins une image candidate, par le moyen d'acquisition d'images, d'un individu approchant le véhicule ;
- une étape de vérification de l'authenticité de l'au moins une image candidate ; cette étape de vérification comprenant :
- une étape reconnaissance, dans l'au moins une image candidate, d'un contour de visage et/ou d'un contour du corps de l'individu approchant le véhicule ;
- une étape de détermination d'un ensemble de zones probatoires de l'au moins une image candidate, réparties sur le contour du visage et/ou le contour du corps de l'individu approchant le véhicule dans l'au moins une image candidate, de sorte que chaque zone de l'ensemble de zones probatoires comprend à la fois une portion du visage et/ou une portion du corps de l'individu approchant le véhicule, et une portion de l'environnement extérieur,
- une étape de positionnement d'un ensemble de zones de référence sur l'image de référence, chaque zone de référence de l'image de référence étant associée à une zone probatoire de l'au moins une image candidate, les positions des zones de référence dans l'image de référence étant identiques aux positions des zones probatoires dans l'au moins une image candidate, la taille et la forme de chaque zone de référence étant respectivement identiques à la taille et à la forme de la zone probatoire à laquelle la zone de référence est associée ;
- une étape de sélection, dans chacune des zones probatoires de l'au moins une image candidate, d'une sous-zone de contexte excluant la portion du visage et/ou du corps de l'individu ;
- une étape de comparaison du contenu de chaque sous-zone de contexte sélectionnée dans chacune des zones probatoires de l'au moins une image candidate, avec un contenu de la zone de référence de l'image de référence à laquelle la zone probatoire est associée ;
- une étape de calcul d'un taux de corrélation entre chacune des sous-zones de contexte et une zone de référence correspondante ;
- une autre étape de comparaison de chaque taux de corrélation à un seuil minimal ;
- une étape de conclusion quant à l'authenticité du contenu de l'au moins une image candidate, en fonction du résultat de ladite comparaison ;
- une étape de confirmation d'une absence d'un leurre ; ou
- une étape de confirmation d'une présence d'un leurre, en fonction du résultat de l'étape de vérification.

Le procédé d'authentification peut comprendre une étape de calcul d'une distance séparant l'individu du véhicule automobile, cette étape de calcul étant effectuée après la deuxième étape d'acquisition de l'au moins une image candidate.

Le nombre de zones probatoires réparties sur le contour du visage et/ou sur le contour du corps de l'individu dans l'au moins une image candidate peut augmenter avec une diminution d'une distance entre le véhicule et l'individu s'approchant dudit véhicule.

Le procédé d'authentification peut comprendre une sous-étape de vérification d'une cohérence géométrique du contenu de l'au moins une image candidate, cette sous-étape de vérification étant effectuée avant l'étape de vérification ou au cours de l'étape de vérification.

Le procédé d'authentification peut comprendre une étape de comparaison d'un champ de vue de l'au moins une image candidate avec un champ de vue de l'image de référence, cette étape de comparaison étant effectuée avant l'étape de vérification au cours de l'étape de vérification.

L'étape de comparaison des champs de vue peut comprendre une sous-étape de comparaison de la distorsion du contenu de l'au moins une image candidate avec la distorsion du contenu de l'image de référence.

Ladite au moins un image candidate peut comprendre une série d'images candidates comprenant au moins deux images candidates successives, l'étape de calcul peut comprendre le calcul d'un taux de corrélation entre chacune des sous-zones de contexte de chaque image candidate de la série d'images candidates et une zone de référence correspondante, l'étape de calcul peut également comprendre le calcul de taux de corrélation moyen pour chaque sous-zone de contexte, chaque taux de corrélation moyen étant calculé par une moyenne des taux de corrélation correspondant à une même zone de référence, et ladite autre étape de comparaison peut comprendre la comparaison de chaque taux de corrélation moyen à un seuil minimal.

L'invention se rapporte également à un dispositif d'authentification d'une image candidate d'un environnement d'un véhicule automobile équipé d'un moyen d'acquisition d'images, le dispositif d'authentification comprenant des éléments matériels et/ou logiciels mettant en œuvre le procédé d'authentification tel que défini précédemment.

L'invention se rapporte également à un véhicule automobile comprenant un dispositif d'authentification tel que défini précédemment ou comprenant des éléments matériels et/ou logiciels mettant en œuvre le procédé d'authentification tel que défini précédemment.

L'invention se rapporte également à un produit programme d'ordinateur comprenant des instructions de code de programme enregistrées sur un support lisible par ordinateur pour mettre en œuvre les étapes du procédé d'authentification tel que défini précédemment lorsque ledit programme fonctionne sur un ordinateur.

L'invention se rapporte également à un support d'enregistrement de données, lisible par un ordinateur, sur lequel est enregistré un programme d'ordinateur comprenant des instructions de code de programme de mise en œuvre du procédé d'authentification tel que défini précédemment.

L'invention se rapporte également à un signal d'un support de données, portant le produit programme d'ordinateur tel que défini précédemment.

On comprend que, dans l'invention, le moyen d'acquisition d'image est fixe relativement au véhicule, et associé à un champ de vision lui aussi fixe relativement au véhicule.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente un véhicule automobile équipé d'un dispositif d'authentification.
La figure 2 est un ordinogramme d'un mode d'exécution d'un procédé d'authentification d'images selon l'invention.
La figure 3 illustre une image de référence.
La figure 4 une image candidate.
La figure 5 est une vue de détail de l'image candidate de la figure 4 avec plusieurs zones probatoires.
La figure 6 illustre l'image de référence de la figure 3 avec plusieurs zones de référence.
La figure 7 illustre un exemple d'une zone probatoire placée sur une image candidate contenant un leurre.
La figure 8 illustre l'image de référence de la figure 3 avec une zone de référence.
La figure 9 est un graphique qui montre un premier exemple d'une évolution du taux de corrélation.
La figure 10 est un graphique qui montre un deuxième exemple d'une évolution du taux de corrélation.

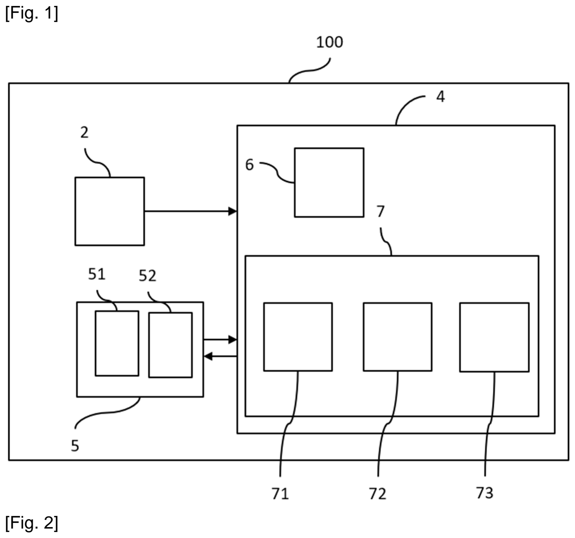

Un exemple d'un véhicule automobile 100 équipé d'un mode de réalisation d'un dispositif d'authentification d'images est décrit ci-après en référence à la figure 1.

Le véhicule automobile 100 peut être un véhicule de tout type, par exemple un véhicule de tourisme ou un véhicule utilitaire, ou un véhicule de transport en commun. Le véhicule automobile 100 comprend un moyen d'acquisition d'images 2, par exemple une caméra, agencé sur le véhicule automobile 100, et configuré pour acquérir des images d'un environnement extérieur audit véhicule automobile. Le moyen d'acquisition d'images 2 peut, par exemple, être agencé sur le toit du véhicule automobile 100, sur les rétroviseurs, sur une face avant du véhicule ou encore sur une face arrière, à la manière d'une caméra de recul.

Le moyen d'acquisition d'images 2 peut être configuré pour prendre plusieurs images, par exemple trente images par seconde. Toutefois, un moyen d'acquisition d'images 2 avec une fréquence d'acquisition plus élevée, par exemple soixante, voire cent-vingt images par seconde peut également être considéré.

De préférence, le moyen d'acquisition d'images 2 est intangible, c'est-à-dire que sa position et ses réglages ne peuvent pas être modifiés. Un même véhicule automobile 100 peut être équipé d'une multitude de moyens d'acquisition d'images 2 agencés à des endroits stratégiques dudit véhicule 100.

Le véhicule automobile 100 comprend également un système de reconnaissance faciale 4 qui permet la mise en œuvre d'un traitement de reconnaissance faciale utilisé pour authentifier les images acquises par le moyen d'acquisition d'images 2. A cet effet, le système de reconnaissance faciale 4 comprend une mémoire 6 et une unité de calcul 7 décrites plus loin dans ce document et mettant en œuvre un procédé d'authentification selon l'invention.

La mémoire 6 comprend avantageusement des informations relatives aux personnes autorisées à accéder au véhicule, ou des personnes autorisées à utiliser une des applications sécurisées par reconnaissance faciale. Les informations contenues dans la mémoire 6 peuvent comprendre les empreintes biométriques faciales des personnes autorisées à accéder au véhicule. Ces empreintes seront utilisées lors de l'identification du visage d'un individu approchant le véhicule parmi les personnes habilitées à avoir accès audit véhicule. Ces empreintes peuvent être mémorisées dans la mémoire 6 à l'issue d'une procédure d'apprentissage.

L'unité de calcul 7 comprend un microprocesseur 71, une mémoire électronique locale 72 et des interfaces de communication 73 permettant au microprocesseur 71 de communiquer avec le moyen d'acquisition d'images 2, avec l'ensemble de systèmes applicatifs 5 et avec la mémoire 6.

Le véhicule comprend également un ensemble 5 d'applications sécurisées par reconnaissance faciale communiquant avec le système de reconnaissance faciale 4. Dans un mode de réalisation, l'ensemble d'applications 5 peut notamment comprendre une application 51 de verrouillage et/ou de déverrouillage des portes du véhicule automobile, en particulier de la porte donnant accès à un poste de pilotage du véhicule 100 et/ou d'une ou de plusieurs portes donnant accès à un habitacle du véhicule automobile 100 et/ou d'un hayon du véhicule automobile 100 ; et une application 52 d'accueil personnalisé utilisant la reconnaissance faciale de l'individu approchant le véhicule et permettant par exemple de paramétrer des réglages du véhicule en fonction des préférences du conducteur, notamment le réglage de la position du siège conducteur. D'autres applications sont envisageables dans le cadre de l'ensemble d'applications 5.

Le véhicule automobile 100, en particulier le système 4 de reconnaissance faciale, comprend tous les éléments matériels et/ou logiciels configurés de sorte à mettre en œuvre le procédé défini dans l'objet de l'invention ou le procédé décrit plus loin dans la description.

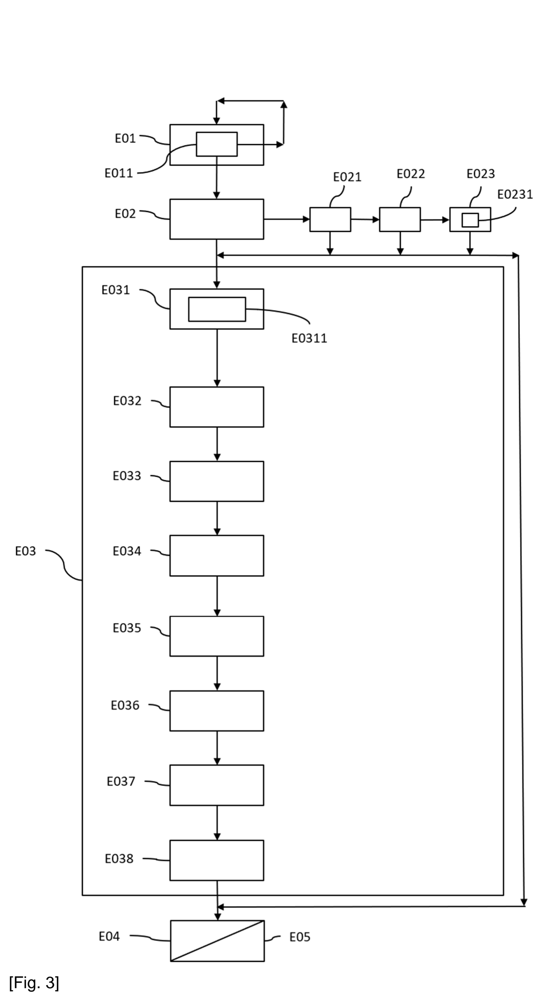

Un mode d'exécution du procédé d'authentification d'une image candidate acquise par le moyen d'acquisition d'images 2 agencé sur le véhicule automobile 100 est décrit ci-après en référence à la figure 2. Le procédé d'authentification est mis en œuvre lorsque le véhicule est à l'arrêt, notamment lorsque le véhicule est garé sur un emplacement de stationnement. Comme nous allons le voir plus en détail par la suite, ceci permet d'obtenir au moins un arrière-plan totalement fixe qui sera particulièrement utile pour vérifier si une personne candidate est réellement présente devant le moyen d'acquisition d'images 2. Le procédé d'authentification comprend une série d'étapes.

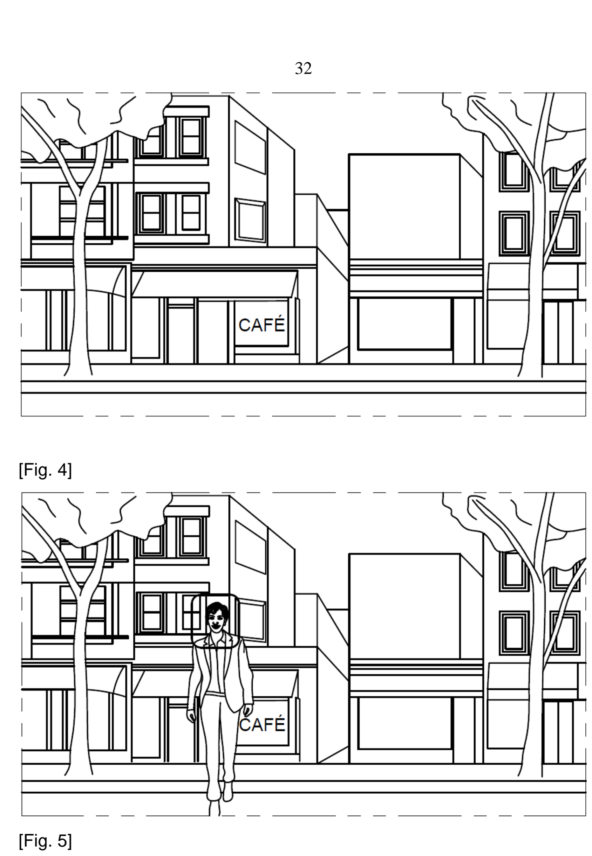

Dans une première étape d'acquisition E01, le moyen d'acquisition d'images 2 acquiert au moins une image de référence d'un environnement extérieur audit véhicule automobile 100. Le moyen d'acquisition d'images 2 peut acquérir plusieurs images de référence dans différentes conditions de luminosité. Un exemple d'image de référence d'un environnement extérieur est illustré sur la figure 3.

La première étape d'acquisition E01 est suivie par une deuxième étape d'acquisition E02 d'au moins une image candidate d'un individu approchant le véhicule. La ou les images candidates sont acquises par le moyen d'acquisition d'images 2, dans les mêmes conditions que lors de la première étape d'acquisition E01, à l'exception éventuelle des conditions de luminosité. La figure 4 illustre un exemple d'une image candidate.

Dans un mode de réalisation préférentiel, le procédé comprend une sous-étape E011 de détection d'un individu approchant le véhicule automobile 100. Dans ce mode de réalisation, le procédé passe à la deuxième étape d'acquisition E02 d'une image candidate lorsqu'un individu est détecté dans les environs du véhicule automobile 100. Autrement dit, tant qu'il n'y a pas eu une détection d'un individu approchant le véhicule 100, le procédé peut reboucler sur la première étape d'acquisition E01 et le moyen d'acquisition d'images 2 acquiert alors une multitude d'images de référence.

Dans un mode de réalisation préférentiel, la deuxième étape d'acquisition E02 d'une image candidate peut être répétée plusieurs fois, de sorte que le moyen d'acquisition d'images 2 acquiert une pluralité d'images candidates. Dans ce mode de réalisation, chaque image candidate se distingue de l'image de référence par le fait qu'un individu est présent dans l'environnement extérieur au véhicule automobile 100. Au moins une partie des images candidates se distinguent les unes des autres par le fait que la position de l'individu par rapport à l'environnement dans lequel il évolue est différente. Autrement dit : la position de l'individu par rapport à l'environnement dans lequel il évolue est différente pour chaque image candidate faisant l'objet d'un traitement d'image décrit ci-dessous. Ces images se différencient les unes des autres par la distance qui sépare l'individu et le moyen d'acquisition d'images 2 agencé sur le véhicule.

Dans ce mode de réalisation préférentiel, le procédé comprend une étape de calcul E021 d'une distance séparant l'individu du véhicule 100. L'étape de calcul E021 de la distance séparant l'individu du véhicule permet de vérifier si l'individu présent dans les images candidates est bien en train d'approcher le véhicule. En particulier, si la distance de séparation calculée a tendance à diminuer chronologiquement avec l'acquisition des images candidates, on peut en conclure que l'individu est en train d'approcher le véhicule. Ainsi, si une répétition de l'étape de calcul E021 de la distance séparant l'individu du véhicule 100 indique une diminution de ladite distance au fil des acquisitions des images candidates par le moyen d'acquisition d'images 2, ceci peut faire office d'une confirmation d'une approche de l'individu détecté au cours de la sous-étape de détection E011 mentionnée précédemment.

Le procédé passe ensuite à une étape de vérification E03 de l'authenticité de l'image candidate. Cette étape correspond à un traitement d'image notamment un traitement de reconnaissance faciale. L'étape de vérification E03 comprend une multitude de sous-étapes décrites dans la suite de cette description.

Globalement, chaque image candidate acquise au cours d'une deuxième étape d'acquisition E02, ou du moins une partie de ces images candidate acquises, est destinée à faire l'objet de l'étape de vérification E03, afin de confirmer ou non l'authenticité de cette ou de ces images candidates.

Pour des soucis de compréhension, la suite des étapes du procédé est décrite comme un traitement d'une image candidate individuelle, sachant que ces étapes du procédé sont applicables à chaque image candidate acquise, ou du moins à une partie des images candidate acquise.

Le procédé comprend une étape de reconnaissance E031, dans l'image candidate, d'un contour de visage et/ou d'un contour d'un corps d'un l'individu approchant le véhicule. Pour ce faire, l'étape de reconnaissance E031 peut comprendre une sous-étape de localisation E0311 du visage et/ou du corps de l'individu approchant le véhicule dans l'image candidate pour déterminer un contour du visage et un contour du corps dudit individu, comme illustré sur la figure 4.

Lorsque le contour de visage et/ou le contour du corps de l'individu approchant le véhicule est reconnu dans l'image candidate, le procédé passe à une étape de détermination E032 d'un ensemble de zones probatoires ZP de l'image candidate.

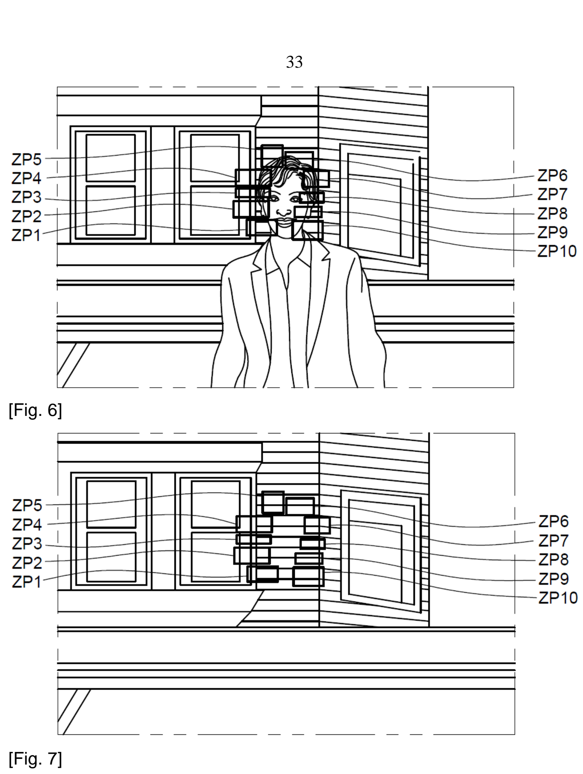

Dans un mode de réalisation préférentiel, le procédé passe à cette étape de détermination E032 d'un ensemble de zones probatoires ZP de l'image candidate lorsque la distance séparant l'individu du véhicule est inférieure ou égale à une distance prédéterminée, par exemple une distance égale à cinq mètres. L'étape de détermination E032 est plus particulièrement illustrée sur la figure 5.

Les zones probatoires ZP sont réparties sur le contour du visage et/ou sur le contour du corps de l'individu approchant le véhicule. Les zones probatoires ZP sont réparties de telle sorte que chaque zone de l'ensemble de zones probatoires ZP comprend à la fois d'une part une portion du visage et/ou une portion du corps de l'individu approchant le véhicule et d'autre part une portion de l'environnement extérieur au véhicule automobile. Un exemple de répartition de zones probatoires ZP sur le contour du visage de l'individu approchant le véhicule est illustré sur la figure 5.

La détermination d'une zone probatoire ZP comprend la détermination de sa position, c'est-à-dire de son emplacement dans l'image candidate, et de sa géométrie, c'est-à-dire sa forme et sa taille. En particulier, une zone probatoire ZP peut être notée ZP(x,y), x et y désignant les coordonnées de la zone probatoire ZP dans le plan de l'image candidate, par exemple les coordonnées du centre de la zone probatoire ZP par rapport au centre de l'image candidate. Ainsi, chaque zone probatoire ZP est déterminée d'une part par sa position (xi, yi) dans le plan de l'image candidate, et d'autre part par sa géométrie. A titre d'exemple, la géométrie d'une zone probatoire ZP peut être déterminée comme étant un quadrilatère, notamment un carré ou un rectangle, ayant une longueur prédéterminée et une largeur prédéterminée.

Selon un mode de réalisation, chaque zone probatoire ZP peut présenter une géométrie et une position qui lui sont propres. Plus particulièrement, les zones probatoires ZP peuvent chacune présenter une taille et une forme différentes d'une zone probatoire ZP à une autre. Par ailleurs, les positions et les tailles respective de l'ensemble des zones probatoires ZP sont telles que les zones probatoires ZP ne se chevauchent pas entre elles.

Optionnellement, le nombre de zones probatoires ZP réparties sur le contour du visage et/ou sur le contour du corps de l'individu dans l'image candidate augmente avec une diminution de la distance séparant l'individu du véhicule 100. Autrement dit, plus l'individu est proche du véhicule 100, plus le nombre de zones probatoires ZP est élevé, jusqu'à atteindre un nombre maximal prédéterminé de zones probatoires ZP. Le nombre maximal de de zones probatoires ZP réparties sur le contour du visage est par exemple supérieur à dix zones probatoires ZP, voire supérieur à quinze zones probatoires ZP.

Selon un exemple, le nombre de zones probatoires ZP réparties sur le contour du visage et/ou sur le contour du corps de l'individu dans l'image candidate augmente de manière linéaire avec la diminution de la distance entre le véhicule 100 et l'individu s'approchant dudit véhicule 100.

Selon un autre exemple, le nombre de zones probatoires ZP double pour chaque mètre en moins de la distance entre le véhicule 100 et l'individu s'approchant dudit véhicule 100.

D'autres exemples de croissance du nombre de zones probatoires ZP réparties sur le contour du visage et/ou sur le contour du corps de l'individu en fonction de la diminution de la distance entre le véhicule 100 et l'individu s'approchant dudit véhicule 100 peuvent être imaginés.

Une fois que les zones probatoires sont déterminées pour l'image candidate en cours de traitement, le procédé passe à une étape de positionnement E033 d'un ensemble de zones de référence ZR sur l'image de référence. Cette étape est illustrée sur la figure 6.

Chaque zone de référence ZR de l'image de référence est associée à une zone probatoire ZP de l'image candidate. Plus précisément, chaque zone de référence ZR de l'image de référence est jumelée à une zone probatoire ZP de l'image candidate, c'est-à-dire que pour un couple d'une zone de référence ZR jumelée à une zone probatoire ZP, la zone de référence ZR et la zone probatoire ZP partagent les mêmes propriétés en termes de géométrie et de position dans leur image respective.

L'image de référence et l'image candidate sont associées à un même repère en deux dimensions. Ainsi, les coordonnées xi et yi d'une zone de référence ZRi dans le plan de l'image de référence sont les mêmes, dans le plan de l'image candidate, que les coordonnées xi et yi de la zone probatoire ZPi à laquelle la zone de référence ZRi est associée.

Le nombre de zones de référence ZR dans l'image de référence est identique au nombre de zones probatoires ZP dans l'image candidate. Les positions des zones de référence ZR dans l'image de référence sont identiques aux positions des zones probatoires ZP dans l'image candidate.

Pour chaque zone de référence ZR, sa taille et sa forme sont respectivement identiques à la taille et à la forme de la zone probatoire ZP à laquelle ladite zone de référence ZR est associée. Ainsi, l'ensemble des zones de référence ZR dans l'image de référence est un reflet de l'ensemble des zones probatoires ZP dans l'image candidate.

Le procédé passe ensuite à une étape de sélection E034, dans chacune des zones probatoires ZP de l'image candidate, d'une sous-zone de contexte excluant la portion du visage et/ou la portion du corps de l'individu. Ce n'est donc pas la portion du visage et/ou du corps de l'individu qui fait l'objet d'un traitement de comparaison pour authentifier l'image candidate en cours d'analyse, mais le contenu de la sous-zone de contexte qui exclue la portion du visage et/ou du corps de l'individu. Le contenu de la sous-zone de contexte représente l'environnement dans lequel se trouve l'individu.

La figure 5 illustre un ensemble de dix zones probatoires ZP1 à ZP10 définies pour l'authentification de l'image candidate. Chacune de ces dix zones probatoires ZP1 à ZP10 comprend une sous-zone de contexte :
- la zone ZP1 comprend une portion d'un montant d'une fenêtre d'un bâtiment ;
- les zones ZP2, ZP3 et ZP4 comprennent chacune une portion du montant de la fenêtre ainsi qu'une portion de la vitre de cette même fenêtre ;
- les zones ZP5 et ZP6 comprennent chacune une portion d'une première façade d'un bâtiment ;
- les zones ZP7, ZP8, ZP9 et ZP10 comprennent chacune une portion d'une première façade d'un bâtiment et une portion d'une deuxième façade du même bâtiment, la deuxième façade étant juxtaposée à la première façade dudit bâtiment.

Dans cette figure 5, le montant de la fenêtre, la vitre de cette même fenêtre, la première façade du bâtiment et la deuxième façade du même bâtiment correspondent à des éléments de contexte présents dans les différentes sous-zones de contexte. Ces éléments de contexte sont tous situés à proximité du visage et/ou du corps de l'individu approchant le véhicule 100. La position et la nature des éléments de contexte dans l'image candidate sont donc dépendantes de la position de l'individu approchant le véhicule 100 dans cette image candidate. Les éléments de contexte désignent ainsi des éléments de l'environnement extérieur qui, dans l'image candidate, se situent à proximité du visage et/ou du corps de l'individu approchant le véhicule 100. Autrement dit, dans l'image candidate, les éléments de contexte sont contigus, autrement dit directement adjacents, au contour du visage et/ou au contour du corps de l'individu approchant le véhicule 100.

De manière générale, les éléments urbains dans l'environnement extérieur au véhicule 100 automobile peuvent faire office d'éléments de contexte. Les éléments de contexte se rapportent par exemples à des bâtiments, des devantures des commerces, des trottoirs, ou autre. Les éléments de contexte peuvent également se présenter sous la forme de marquages au sol, de poteaux, tels que des poteaux de panneaux de signalisation, etc. Toutefois, des éléments naturels, telle que la végétation, notamment des arbres, des buissons ou des arrangement floraux peuvent également faire office d'éléments de contexte. Le nombre et la nature des éléments de référence dépend de l'environnement extérieur dans lequel se situe le véhicule 100 automobile.

Le procédé passe ensuite à une étape de comparaison E035 du contenu de chaque sous-zone de contexte sélectionnée dans les zones probatoires ZP de l'image candidate au contenu de chaque zone de référence ZR de l'image de référence. Il s'agit donc, pour l'ensemble des sous-zones de contexte, de comparer l'environnement dans lequel se trouve l'individu dans l'image candidate à l'environnement présent dans l'ensemble des zones de référence ZR dans l'image de référence. Plus précisément, il s'agit de comparer le contenu des sous-zones de contexte au contenu des zones de référence ZR dans l'image de référence. Autrement dit, l'étape de comparaison E035 permet de vérifier si les éléments de contexte situés en bordure du visage et/ou en bordure du corps de l'individu dans l'image candidate sont également présents dans les zones de référence ZR dans l'image de référence, et de vérifier si ces éléments de contexte sont cohérents avec le contenu des zones de référence ZR dans l'image de référence.

Pour ce faire, le procédé passe à une étape de calcul E036 d'un taux de corrélation entre chacune des sous-zones de contexte et une zone de référence ZR correspondante. Avantageusement, chaque zone de référence ZR comprend un contour identique ou sensiblement identique au contour de la sous-zone de contexte avec laquelle elle est comparée. Pour chaque image candidate, on obtient autant de taux de corrélation que le nombre de zones probatoires.

Le taux de corrélation spatiale prend en compte le niveau de similarité entre chaque pixel d'une zone de contexte et un pixel correspondant d'une zone de référence ZR correspondante. Avant cette comparaison, des traitements peuvent être réalisés sur les données de l'une ou plusieurs des images candidates pour tenir compte du fait que les différentes images candidates ont pu être acquises dans des conditions d'éclairage différentes.

Dans l'exemple de l'image candidate de la figure 5 et l'image de référence de la figure 6, les éléments de contextes mentionnés précédemment, qui font partie du contenu des sous-zones de contexte dans les zones probatoires ZP dans l'image candidate, sont également présents dans les zones de référence ZR de l'image candidate. Le contenu des sous-zones de contexte dans l'image candidate est très similaire, voire quasi-identique au contenu des zones de référence ZR dans l'image de référence. Les taux de corrélation spatiale calculés pour cet exemple-là sont donc très élevés.

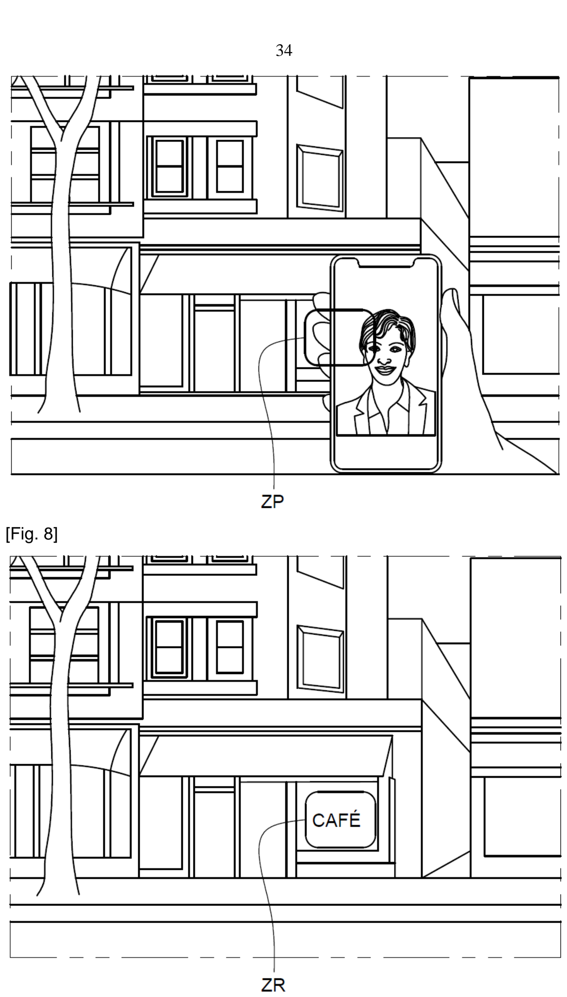

La figure 7 illustre un exemple d'une image candidate contenant un leurre. La zone probatoire placée sur cette image candidate, et plus précisément la zone de contexte excluant la portion du visage de l'individu, comprend certes une portion de l'environnement extérieur, en l'occurrence une portion d'une vitrine d'une devanture d'un magasin, mais cette zone probatoire comprend également une portion d'une main tenant un écran d'affichage, ainsi qu'une portion d'un fond blanc correspondant à un fond d'écran d'une image affichée sur ledit écran.

Dans le cas de cet exemple, lors de l'étape de comparaison E035, le contenu de sous-zone de contexte de la zone probatoire ZP placée sur l'image candidate illustrée sur la figure 7 n'est pas cohérent avec le contenu de la zone de référence ZR correspondante dans l'image de référence illustrée sur la figure 8, ce qui résulte en un taux de corrélation bas au cours de l'étape de calcul E036.

La précision du taux de corrélation dépend de la taille des zones probatoires ZP et de leur nombre. Le calcul de chaque taux de corrélation spatiale peut être réalisé par un réseau de neurones, notamment un réseau de neurones convolutifs.

Le procédé passe ensuite à une autre étape de comparaison E037 de chaque taux de corrélation à un seul minimal. Pour ce faire, on définit un seul minimal CORMIN du taux de corrélation entre une zone probatoire ZP et une zone de référence ZR associée, de sorte que :
- une image candidate sera authentifiée si tous les taux de corrélation sont supérieurs au seuil minimal CORMIN,
- l'image candidate sera rejetée dans le cas contraire.

Le seuil minimal CORMIN peut par exemple être fixé à 97%, voire 98% ou 99%, ce qui correspond à un traitement très sélectif. Il peut également être calibré à des valeurs inférieures, par exemple 95% ou 90%, si l'on souhait appliquer un traitement moins sélectif que celui décrit précédemment.

Enfin, le procédé passe à une étape de conclusion E038 quant à l'authenticité du contenu de l'image candidate, en fonction du résultat de ladite comparaison effectuée lors de l'étape E037. L'image candidate est authentifiée si tous les taux de corrélation ou du moins la plupart des taux de corrélation sont supérieurs au seuil minimal CORMIN. L'image candidate est rejetée dans le cas contraire.

Comme indiqué précédemment, lorsqu'un individu s'approche du véhicule 100 à l'arrêt, le moyen d'acquisition d'image peut acquérir une multitude d'image candidates. L'ensemble de ces images candidates, ou du moins une partie de ces images, font alors l'objet de l'étape de vérification E03. Le procédé est donc itératif. Répéter les étapes du procédé en général, en particulier les sous-étapes E031 à E038 de l'étape de vérification E03 pour un grand nombre d'images candidates, permet d'obtenir un plus grand nombre de calculs de taux de corrélation, ce qui permet de renforcer la précision du taux de corrélation, et donc sa pertinence. Ceci permet d'augmenter la probabilité de détecter des incohérences entre les images candidates et la ou les images de référence, ces incohérences sont généralement indicatives de potentiels comportements frauduleux.

En particulier, si la plupart des taux de corrélation calculés pour les images candidates traitées sont élevés, cela signifie que l'environnement dans lequel se déplace l'individu approchant le véhicule 100 reste identique au cours du déplacement dudit individu et que cet environnement correspond bien à celui initialement enregistré au moment de la première étape d'acquisition E01 de la ou des images de référence.

En appliquant les sous-étapes de l'étape de vérification E03 de l'authenticité sur un grand nombre d'images candidates, il est possible de suivre l'évolution du taux de corrélation au fil du déplacement de l'individu par rapport au véhicule 100. En particulier, chaque itération de l'étape de calcul E036 d'un taux de corrélation, et des étapes suivantes, permet d'affiner le résultat final de l'étape de vérification E03.

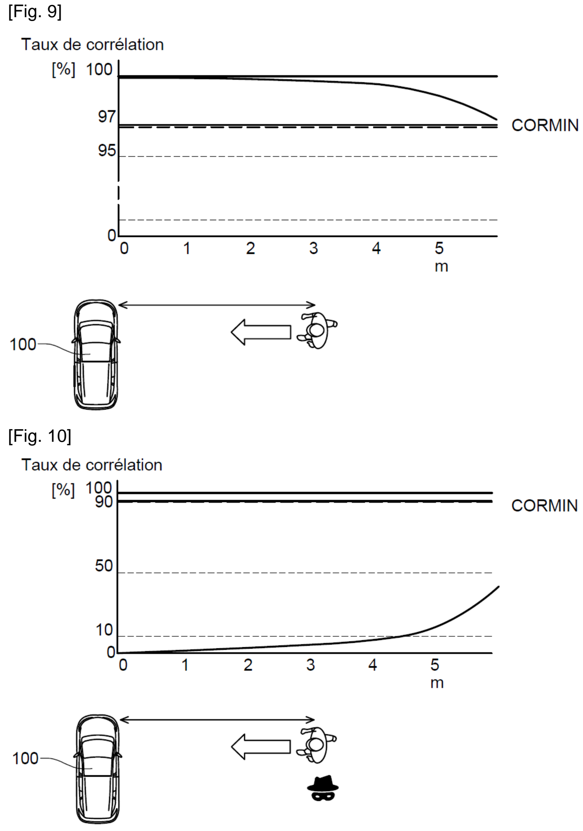

L'évolution du taux de corrélation en fonction de la distance séparant l'individu du véhicule 100 peut être représentée graphiquement, comme le montrent les figures 9 et 10. Sur ces figures 9 et 10, la distance (en mètres) séparant le véhicule 100 de l'individu qui s'en approche figure sur l'axe des abscisses, tandis que l'axe des ordonnées indique le taux de corrélation en pourcentage. Une ligne droite horizontale en pointillés indique le seuil minimal CORMIN prédéfini.

La figure 9 illustre un premier exemple d'une évolution d'un taux de corrélation. Dans ce premier exemple, tous les taux de corrélation calculés sont supérieurs au seuil minimal CORMIN prédéfini. Notons que les taux de corrélation calculés augmentent lorsque la distance séparant l'individu du véhicule 100 diminue ; les taux de corrélation calculés convergent vers un taux de corrélation maximal. Les images candidates traitées dans le cas de ce premier exemple sont toutes authentifiées dans l'étape de conclusion E038 du procédé. Le procédé passe alors à une étape de confirmation E04 d'une absence de leurre, ce qui signifie que la personne à proximité du véhicule est authentique, c'est-à-dire qu'il ne s'agit pas d'une tentative de fraude pour accéder au véhicule 100.

A contrario, la figure 10 illustre un deuxième exemple d'une évolution d'un taux de corrélation, exemple dans lequel tous les taux de corrélation calculés sont inférieurs au seuil minimal prédéfini. Notons que les taux de corrélation calculés diminuent lorsque la distance séparant l'individu du véhicule 100 diminue : ils convergent vers un taux de corrélation minimal.

Les images candidates traitées dans le cas de cet exemple ne sont pas authentifiées, mais rejetées lors de l'étape de conclusion E038. Le procédé passe alors à une étape de confirmation E05 d'une présence d'un leurre, autrement dit l'étape E05 confirme que la personne à proximité du véhicule ne semble pas authentique, comme dans le cas de la figure 7 où le leurre prend la forme d'une photo du visage d'un individu affiché sur un écran.

Optionnellement, le procédé peut comprendre une sous-étape de vérification E022 d'une cohérence géométrique du contenu de l'image candidate. Par exemple, à partir d'une image candidate dans laquelle l'individu entier y figure de la tête au pieds, un calculateur peut estimer la taille dudit individu, ainsi que sa distance par rapport au véhicule 100. Si la taille estimée pour l'individu n'est pas cohérente avec la distance de cet individu par rapport au véhicule 100, il y a une incohérence géométrique dans l'image candidate, ce qui peut être un signe d'une tentative de fraude. Dans ce cas, le procédé peut passer directement à l'étape de confirmation E05 d'une présence d'un leurre, sans nécessairement passer par l'étape de vérification E03 de l'authenticité de la ou des images candidates.

De manière générale, la sous-étape de vérification E022 d'une cohérence géométrique du contenu de l'image candidate permet de vérifier si les dimensions de l'individu approchant le véhicule 100 et/ou sa vitesse de déplacement et/ou la position dudit individu par rapport à son environnement sont cohérents. Cette étape optionnelle permet de rejeter efficacement et rapidement une image frauduleuse car elle peut être effectuée avant l'étape de vérification E03 du procédé.

Dans l'exemple de la figure 7, la hauteur du visage de l'individu n'est pas cohérente ni avec sa taille, qui peut être préenregistrée dans la mémoire 6 du système de reconnaissance faciale 4 par exemple, ni avec sa distance par rapport au véhicule 100. Grâce à la sous-étape de vérification E022 de la cohérence géométrique du contenu de l'image candidate, le procédé peut rapidement détecter une potentielle tentative de fraude passer directement à l'étape de confirmation E05 d'une présence d'un leurre, sans nécessairement passer par l'étape de vérification E03 de l'authenticité de la ou des images candidates. Cette étape de vérification E022 optionnelle permet de rejeter efficacement et rapidement une image frauduleuse car elle peut être effectuée avant l'étape de vérification E03 du procédé.

Alternativement cette étape de vérification E022 optionnelle pourrait également être réalisée au cours de l'étape de vérification E03. Dans cette hypothèse, l'étape de conclusion E038 décrite précédemment pourrait prendre en compte le résultat de cette étape : si une incohérence géométrique est détectée dans l'image candidate alors l'image candidate serait rejetée.

Optionnellement, le procédé peut comprendre une étape de comparaison E023 du champ de vue de l'image candidate avec un champ de vue de l'image de référence. Cette étape de comparaison E023 permet de vérifier si l'angle d'inclinaison avec lequel on obtient l'image candidate est identique à l'angle d'inclinaison du moyen d'acquisition d'image sur le véhicule 100 qui prend la l'image de référence. Si les angles d'inclinaison sont identiques ou du moins similaires pour l'image candidate et pour l'image de référence, la probabilité d'une tentative de fraude est relativement faible. Si l'angle d'inclinaison pour l'image candidate est nettement différent de l'angle d'inclinaison pour l'image de référence, la probabilité d'une tentative de fraude est plus élevée. Dans ce cas, le procédé peut passer directement à l'étape de confirmation E05 d'une présence d'un leurre, sans nécessairement passer par l'étape de vérification E03 de l'authenticité de la ou des images candidates.

D'une manière générale, l'étape de comparaison E023 du champ de vue de l'image candidate avec un champ de vue de l'image de référence peut également permettre de comparer la distorsion desdites images. A cet effet, l'étape de comparaison E023 peut comprendre une sous-étape de comparaison E0231 de la distorsion du contenu de l'image candidate avec la distorsion du contenu de l'image de référence.

Si la distorsion de l'image candidate est identique ou du moins similaire à la distorsion de l'image de référence acquise avec le moyen d'acquisition d'images 2 agencé sur le véhicule 100, la probabilité d'une tentative de fraude est relativement faible. Si la distorsion de l'image candidate est nettement différente de la distorsion de l'image de référence, cela peut être dû au fait que ce n'est pas le moyen d'acquisition d'images 2 agencé sur le véhicule 100 qui a acquis l'image candidate, ce qui peut être un indicateur d'une tentative de fraude. Dans ce cas, le procédé peut passer directement à l'étape de confirmation E05 d'une présence d'un leurre, sans nécessairement passer par l'étape de vérification E03 de l'authenticité de la ou des images candidates.

Cette étape optionnelle permet de rejeter efficacement et rapidement une image frauduleuse car elle peut être effectuée en amont de l'étape de vérification E03 de l'authenticité de la ou des images candidates.

Alternativement cette étape de vérification E023 optionnelle pourrait également être réalisée au cours de l'étape de vérification E03. Dans cette hypothèse, l'étape de conclusion E038 décrite précédemment pourrait prendre en compte le résultat de cette étape : si la distorsion de l'image candidate est nettement différente de la distorsion de l'image de référence alors l'image candidate serait rejetée.

Selon un mode de réalisation, les étapes E031 à E036 peuvent être répétées pour une série d'images candidates successives. On dispose ainsi, pour chaque zone de référence, d'une série taux de corrélation, chaque taux de corrélation étant calculé avec une image candidate de la série d'images candidates successives. Ensuite, on peut effectuer une moyenne des taux de corrélation correspondant à une même zone de référence. Lors de l'étape de comparaison E037, on compare la moyenne de chaque taux de corrélation moyen à un seuil minimal. Un procédé d'authentification basé sur une série d'images candidates successives est plus robuste qu'un procédé basé sur une unique image candidate. Par exemple, dans l'hypothèse où certaines images candidates seraient biaisées par le passage d'un objet ou d'une personne dans l'arrière-plan de l'individu approchant le véhicule, on pourrait tout de même parvenir à identifier cet individu pourvu qu'il existe un nombre suffisant d'images candidates dans lesquelles l'arrière-plan n'est pas modifié.

Le procédé d'authentification permet ainsi de repérer efficacement et à un coût économique des leurres et donc des tentatives de fraude. Cette solution est donc difficilement contournable par la création de leurres. De plus, elle est rapide, ce qui est appréciable pour les usagers lorsque les requêtes d'authentification sont répétitives. En plus de réduire le temps de traitement, l'invention permet d'éviter l'achat de licences portant sur des algorithmes du marché.

## Revendications

1. Procédé d'authentification d'une image candidate acquise par un moyen d'acquisition d'images (2) agencé sur un véhicule (100) automobile pour acquérir des images d'un environnement extérieur audit véhicule (100) automobile, le procédé d'authentification étant mis en œuvre lorsque le véhicule (100) est à l'arrêt, et **caractérisé en ce qu'**il comprend les étapes suivantes :
- une première étape d'acquisition (E01), par le moyen d'acquisition d'images (2), d'au moins une image de référence ; suivie par
- une deuxième étape d'acquisition (E02) d'au moins une image candidate, par le moyen d'acquisition d'images (2), d'un individu approchant le véhicule (100) ;
- une étape de vérification (E03) de l'authenticité de l'au moins une image candidate ; cette étape de vérification (E03) comprenant :
- une étape reconnaissance (E031), dans l'au moins une image candidate, d'un contour de visage et/ou d'un contour du corps de l'individu approchant le véhicule (100) ;
- une étape de détermination (E032) d'un ensemble de zones probatoires (ZP) de l'au moins une image candidate, réparties sur le contour du visage et/ou le contour du corps de l'individu approchant le véhicule (100) dans l'au moins une image candidate, de sorte que chaque zone de l'ensemble de zones probatoires (ZP) comprend à la fois une portion du visage et/ou une portion du corps de l'individu approchant le véhicule (100), et une portion de l'environnement extérieur,
- une étape de positionnement (E033) d'un ensemble de zones de référence (ZR) sur l'image de référence, chaque zone de référence (ZR) de l'image de référence étant associée à une zone probatoire (ZP) de l'au moins une image candidate, les positions des zones de référence (ZR) dans l'image de référence étant identiques aux positions des zones probatoires (ZP) dans l'au moins une image candidate, la taille et la forme de chaque zone de référence (ZR) étant respectivement identiques à la taille et à la forme de la zone probatoire (ZP) à laquelle la zone de référence (ZR) est associée ;
- une étape de sélection (E034), dans chacune des zones probatoires de l'au moins une image candidate, d'une sous-zone de contexte excluant la portion du visage et/ou du corps de l'individu ;
- une étape de comparaison (E035) du contenu de chaque sous-zone de contexte sélectionnée dans chacune des zones probatoires (ZP) de l'au moins une image candidate, avec un contenu de la zone de référence (ZR) de l'image de référence à laquelle la zone probatoire (ZP) est associée ;
- une étape de calcul (E036) d'un taux de corrélation entre chacune des sous-zones de contexte et une zone de référence (ZR) correspondante ;
- une autre étape de comparaison (E037) de chaque taux de corrélation à un seuil minimal ;
- une étape de conclusion (E038) quant à l'authenticité du contenu de l'au moins une image candidate, en fonction du résultat de ladite comparaison ;
- une étape de confirmation (E04) d'une absence d'un leurre ; ou
- une étape de confirmation (E05) d'une présence d'un leurre, en fonction du résultat de l'étape de vérification (E03).

2. Procédé d'authentification selon la revendication précédente, **caractérisée en ce qu'**il comprend une étape de calcul (E021) d'une distance séparant l'individu du véhicule (100) automobile, cette étape de calcul (E021) étant effectuée après la deuxième étape d'acquisition (E02) de l'au moins une image candidate.

3. Procédé d'authentification selon l'une des revendications précédentes, **caractérisé en ce que** le nombre de zones probatoires (ZP) réparties sur le contour du visage et/ou sur le contour du corps de l'individu dans l'au moins une image candidate augmente avec une diminution d'une distance entre le véhicule (100) et l'individu s'approchant dudit véhicule (100).

4. Procédé d'authentification selon l'une des revendications précédentes, **caractérisé en ce qu'**il comprend une sous-étape de vérification (E022) d'une cohérence géométrique du contenu de l'au moins une image candidate, cette sous-étape de vérification (E022) étant effectuée avant l'étape de vérification (E03) ou au cours de l'étape de vérification (E03).

5. Procédé d'authentification selon l'une quelconque des revendications précédentes, **caractérisée en ce qu'**il comprend une étape de comparaison (E023) d'un champ de vue de l'au moins une image candidate avec un champ de vue de l'image de référence, cette étape de comparaison (E023) étant effectuée avant l'étape de vérification (E03) ou au cours de l'étape de vérification (E03).

6. Procédé d'authentification selon la revendication précédente, **caractérisé en ce que** l'étape de comparaison (E023) des champs de vue comprend une sous-étape de comparaison (E0231) de la distorsion du contenu de l'au moins une image candidate avec la distorsion du contenu de l'image de référence.

7. Procédé d'authentification selon l'une quelconque des revendications précédentes, **caractérisée en ce que** ladite au moins un image candidate comprend une série d'images candidates comprenant au moins deux images candidates successives, **en ce que** l'étape de calcul (E036) comprend le calcul d'un taux de corrélation entre chacune des sous-zones de contexte de chaque image candidate de la série d'images candidates et une zone de référence (ZR) correspondante, **en ce que** l'étape de calcul (E036) comprend également le calcul de taux de corrélation moyen pour chaque sous-zone de contexte, chaque taux de corrélation moyen étant calculé par une moyenne des taux de corrélation correspondant à une même zone de référence, et **en ce que** ladite autre étape de comparaison (E037) comprend la comparaison de chaque taux de corrélation moyen à un seuil minimal.

8. Dispositif d'authentification d'une image candidate d'un environnement d'un véhicule (100) automobile équipé d'un moyen d'acquisition d'images (2), le dispositif d'authentification comprenant des éléments (4, 5, 6, 7) matériels et/ou logiciels mettant en œuvre le procédé d'authentification selon l'une des revendications précédentes.

9. Véhicule automobile **caractérisé en ce qu'**il comprend un dispositif d'authentification selon la revendication 8 ou **en ce qu'**il comprend des éléments (4, 5, 6, 7) matériels et/ou logiciels mettant en œuvre le procédé d'authentification selon l'une des revendications 1 à 7.

10. Produit programme d'ordinateur comprenant des instructions de code de programme enregistrées sur un support lisible par ordinateur pour mettre en œuvre les étapes du procédé d'authentification selon l'une quelconque des revendications 1 à 7 lorsque ledit programme fonctionne sur un ordinateur.
